# EUROPEAN PATENT APPLICATION

(11) **EP 2 436 551 A2**
(43) Date of publication of application: **04.04.2012**
(21) Application number: 11180740.0
(22) Date of filing: 09.09.2011
(51) Int. Cl.: B60L 11/18

(54) **Charge control system and electrical vehicle**

(30) Priority: 29.09.2010 JP 2010218817
(71) Applicant: Hitachi Ltd., Tokyo 100-8280 (JP)
(72) Inventor: Shin, Yamauchi, Tokyo, 100-8220 (JP)
(74) Representative: Beetz & Partner

(57) **Abstract**

A charge control system, which controls a charging device of an electricity storage device comprising a plurality of cells connected in series and a cell voltage detection circuit that detects the cell voltage of each of the cells, includes: a control circuit that controls charging of the electricity storage device by the charging device on the basis of result of comparison of a target charging voltage for the electricity storage device and total of values of the cell voltages detected by the cell voltage detection circuit.

## Description

### INCORPORATION BY REFERENCE

The disclosure of the following priority application is herein incorporated by reference:
Japanese Patent Application No. 2010-218817, filed September 29, 2010.

The present invention relates to a charge control system.

Along with the increase of attention to environmental problems such as global warming and atmospheric contamination and so on, and moreover in connection with automobiles, compulsory regulations relating to reduction of fuel consumption and diminution of harmful substances in the exhaust gases are nowadays being progressively strengthened. Due to this, the development of electric automobiles and of hybrid automobiles in which a motor and an internal combustion engine are combined has progressed remarkably, and these vehicle are now widespread. In such a vehicle, a lithium ion battery or a nickel-hydrogen battery or the like is used as an electricity storage device that constitutes a power source for the motor. For example, with an electricity storage device that uses lithium ion battery, around a hundred cells of lithium ion battery are connected in series, so that an output voltage of 300 V to 400 V is obtained.

A so-called cell controller, i.e. a voltage detection circuit, is attached to these cells that are connected in series. Such a cell controller detects information such as the cell voltages, i.e. the output voltage of each of the cells, their levels of charge, i.e. the amount of charge in the electricity storage device, and so on, and performs transmission and reception of the above described cell information and charging and discharging control information to and from a controller that is connected to the electricity storage device. The output terminals of a charging device are connected to the electricity storage device via a relay. A charge control system controls the charging on the basis of the state of the charging device and the information about the electricity storage device, so that the electricity storage device reaches a predetermined level of charge. Since, with an electric automobile, the amount of electrical energy charged into the electricity storage device is directly related to the distance the vehicle can travel (i.e. to the range), accordingly it is desirable that the amount of stored electrical power should be as high as practicable.

However, since the voltage range is limited from the aspect of preventing deterioration of the electricity storage device and in the interests of safety of the electricity storage device, accordingly it is necessary to provide a voltage sensor of high accuracy in order to control the voltage within these limits, and in order to use the electrical power of the electricity storage device in an efficient manner.

On the other hand, since increasing the accuracy of the voltage sensor entails increasing the performance of the voltage sensor, of its peripheral circuitry, and of a reference power source and so on, and since this leads to increase of the price of the charging device, accordingly it becomes very important to devise a voltage detection method whose cost is low and whose accuracy is high.

In order to solve this problem, a charging control method for a charging device of an electricity storage device has been disclosed in, for example, Japanese Laid-Open Patent Publication 2000-299939. The accuracy of voltage detection by the voltage sensor that is used in control of the charging device is decreased due to deviation of its characteristics due to manufacturing variations and due to the influence of the measurement environment such as temperature and voltage and so on. Due to this, with this prior art charging control method, the value from the voltage sensor is corrected on the basis of the value from a temperature sensor and information about the voltages of the cells within the electricity storage device, and thereby deterioration of the voltage detection accuracy is kept down.

With the prior art charging control method described above, the voltage sensor controls the charging device by using a voltage sensor within the electricity storage device, and corrects the value from this voltage sensor with a temperature sensor within the electricity storage device, or corrects the value from the voltage sensor after estimating the total battery voltage of the electricity storage device as the voltage of a particular cell within the electricity storage device multiplied by the number of cells. However, variation of the characteristics of each of the cells arises with this kind of charging control method, not only due to variation of the cell voltages between the plurality of cells in the electricity storage device, but also, for example, due to variations during manufacture and changes in the characteristics due to long term use. Due to this, with such a prior art charging control method, since it is not possible to detect the total battery voltage of the electricity storage device in an accurate manner because of deviation between the voltage of a representative cell multiplied by the number of cells and the actual total voltage of the electricity storage device, there is a problem from the point of view of preventing overcharging with regard to it not being possible to charge up the electricity storage device to a high charge level with good accuracy.

According to the 1st aspect of the present invention, a charge control system that controls a charging device of an electricity storage device comprising a plurality of cells connected in series and a cell voltage detection circuit that detects the cell voltage of each of the cells, comprises: a control circuit that controls charging of the electricity storage device by the charging device on the basis of result of comparison of a target charging voltage for the electricity storage device and total of values of the cell voltages detected by the cell voltage detection circuit.

According to the 2nd aspect of the present invention, it is preferred that a charge control system according to the 1st aspect further comprises: an output voltage detection circuit that detects output voltage of the charging device, and wherein: the control circuit controls charging of the electricity storage device by the charging device, on the basis of result of comparison of the target charging voltage for the electricity storage device and the output voltage detected by the output voltage detection circuit, and on the basis of the result of the comparison of the target charging voltage and the total of the values of the cell voltages detected by the cell voltage detection circuit.

According to the 3rd aspect of the present invention, the control circuit in a charge control system according to the 2nd aspect may control the charging of the electricity storage device on the basis of the result of the comparison of the target charging voltage and the detected output voltage before the output voltage detected by the output voltage detection circuit reaches a predetermined voltage that is lower than the target charging voltage, and control the charging of the electricity storage device on the basis of the result of the comparison of the target charging voltage and the total of the values of the cell voltages detected by the cell voltage detection circuit after the output voltage has reached the predetermined voltage.

According to the 4th aspect of the present invention, the control circuit in a charge control system according to the 2nd aspect may control the charging of the electricity storage device on the basis of the result of the comparison of the target charging voltage and the detected output voltage before the output voltage detected by the output voltage detection circuit reaches at a predetermined voltage that is lower than the target charging voltage, and correct the output voltage detected by the output voltage detection circuit according to the total of the values of cell voltages detected by the cell voltage detection circuit and controls the charging of the electricity storage device on the basis of the result of the comparison of the target charging voltage and the corrected output voltage before the output voltage has reached at the predetermined voltage.

According to the 5th aspect of the present invention, it is preferred that in a charge control system according to any one of the 2nd through 4th aspects, the control circuit comprises a target value determination circuit that determines a target value for output power or for output current of the charging device on the basis of the result of the comparison of the target charging voltage and the output voltage or the result of the comparison of the target charging voltage and the total of the values of cell voltages, and the control circuit controls the output power or the output current of the charging device according to the target value determined by the target value determination circuit.

According to the 6th aspect of the present invention, it is preferred that in a charge control system according to the 5th aspect, after the output power of the charging device has reached the target value, the target value determination circuit gradually reduces the target value for the output current of the charging device, so that the output power of the charging device does not exceed the target value.

According to the 7th aspect of the present invention, it is preferred that in a charge control system according to the 5th aspect, after the output voltage detected by the output voltage detection circuit or the total of the values of the cell voltages detected by the cell voltage detection circuit has reached a predetermined voltage that is lower than the target charging voltage, the target value determination circuit gradually reduces the target value for the output current of the charging device.

According to the 8th aspect of the present invention, the control circuit in a charge control system according to any one of the 1st through the 7th aspects may set the output current of the charging device to zero and pause charging, when the cell voltage detection circuit performs voltage detection of the voltage of each of the cells.

According to the 9th aspect of the present invention, an electric automobile comprises: the charge control system according to any one of the 2nd through 8th aspects; and the electricity storage device according to any one of the 2nd through 8th aspects; wherein: detection accuracy of the output voltage of the charging device by the output voltage detection circuit is lower than detection accuracy of the cell voltages by the cell voltage detection circuit included in the electricity storage device.

According to the present invention, it is possible to detect the total voltage of an electricity storage device accurately and to charge up the electricity storage device to a high charge level at high accuracy.

### BRIEF DESCRIPTION OF THE DRAWINGS

Fig. 1 is a figure showing an example of the structure of an electrical power system for an electric automobile that is equipped with an electricity storage device, a charging device, and a charge control system according to an embodiment of the present invention;
Fig. 2 is a figure showing an example of the structure of the charge control system 107 shown in Fig. 1;
Fig. 3 is a figure showing an example of a target value determination method performed by a target value determination unit 203 shown in Fig. 2;
Fig. 4 is a figure showing another example of a target value determination method performed by the target value determination unit 203 shown in Fig. 2;
Fig. 5 is a flow chart showing a charging control program of this embodiment;
Fig. 6 is a figure showing an example of relationships between the target values for output voltage, output power, and output current and the values actually detected by an output detection unit 201 (refer to Fig. 2), when the charging control program shown in Fig. 5 is executed;
Fig. 7 is a figure showing an example of control in which charging is controlled by using the output voltage detected by a voltage sensor 103a of the charging device 103, and the total of the values of the cell voltages received by an electricity storage device information reception unit 202;
Fig. 8 is a figure showing another example of control, in which charging is controlled by using the output voltage detected by the charging device side voltage sensor 103a and the total of the value of the cell voltages received by the electricity storage device information reception unit 202;
Fig. 9 is a figure showing an example in which a charging paused interval for measuring the cell voltages is provided to the first example of charging control shown in Fig. 7; and
Fig. 10 is a figure showing an example in which charging is controlled by correcting the output voltage detected by the charging device side voltage sensor 103a with the total of the value of the cell voltages received by the electricity storage device information reception unit 202.

### DESCRIPTION OF THE PREFERRED EMBODIMENTS

Embodiments of the charge control system of the present invention that are mounted to an electric automobile will now be explained. It should be understood, however, that the field of application of the present invention is not limited to an electric automobile; it could also be applied to a charge control system for a charging device that performs charging of an electricity storage device for a construction vehicle, an electric railway vehicle, an electric drive device for general industrial use, or the like.

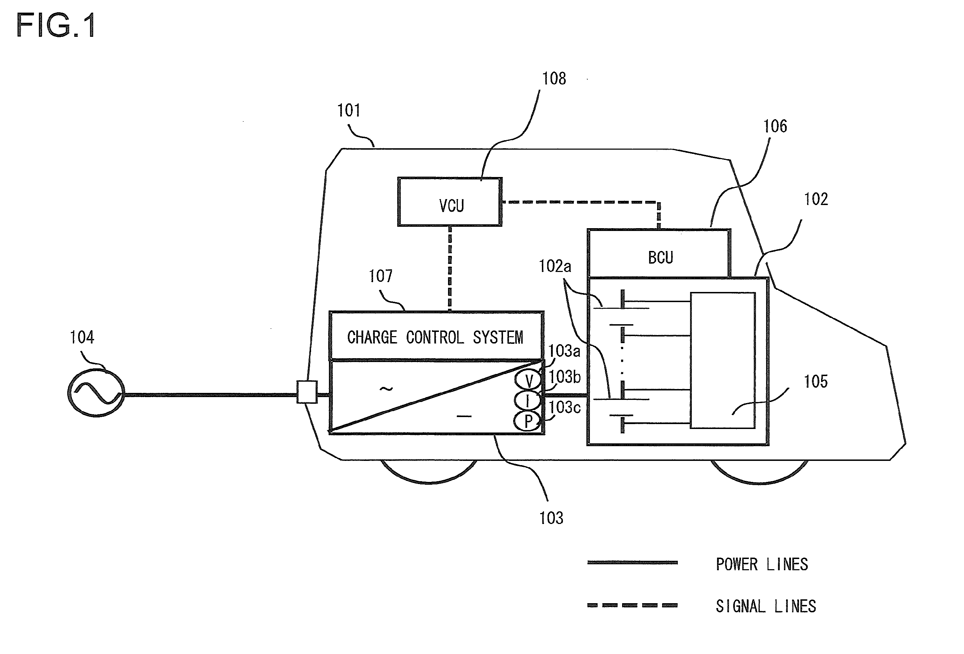

Fig. 1 is a figure showing an example of the structure of an electrical power system for an electric automobile that is equipped with an electricity storage device, a charging device, and a charge control system 107 according to an embodiment of the present invention. An electric automobile 101 includes an electricity storage device 102 that serves as a source of power, and a charging device 103 for charging up this electricity storage device 102. Power is supplied to the electricity storage device 102 via the charging device 103 from a commercial power supply external to the electric automobile 101. A plurality of battery cells 102a are connected in series within the electricity storage device 102, and moreover a voltage detection circuit 105 is provided that detects the voltage of each of these battery cells 102a (hereinafter termed its "cell voltage"). The cell voltages detected by the voltage detection circuit 105 are transmitted to a BCU 106 that is a controller for the electricity storage device 102. The BCU 106 monitors the state of charge and the anomaly state of the electricity storage device 102 on the basis of the voltage information about the cell voltages and so on that is thus received.

The charging device 103 includes a voltage sensor 103a that detects the output voltage, a current sensor 103b that detects the output electrical current, a power sensor 103c that detects the output electrical power, and a charge control system 107 that controls charging. It should be understood that the value of the output power of the charging device 103 may be obtained by multiplying together the output voltage value from the voltage sensor 103a and the output current value from the current sensor 103b, and in this case the power sensor 103c may be omitted. The charge control system 107 includes a CPU and memory and so on, not shown in the figures, and receives information related to the state of the electricity storage device 102 from the BCU 106 via a VCU 108, and this is a controller for the electric automobile 101. Moreover, the charge control system 107 inputs sensor signals from the voltage, current, and power sensors 103a through 103c, and controls charging of the electricity storage device 102 on the basis of this information. It should be understood that it would also be acceptable to arrange for this information related to the state of the electricity storage device 102 not to be inputted via the BCU 106 or to the VCU 108, but to be inputted directly from the voltage detection circuit 105.

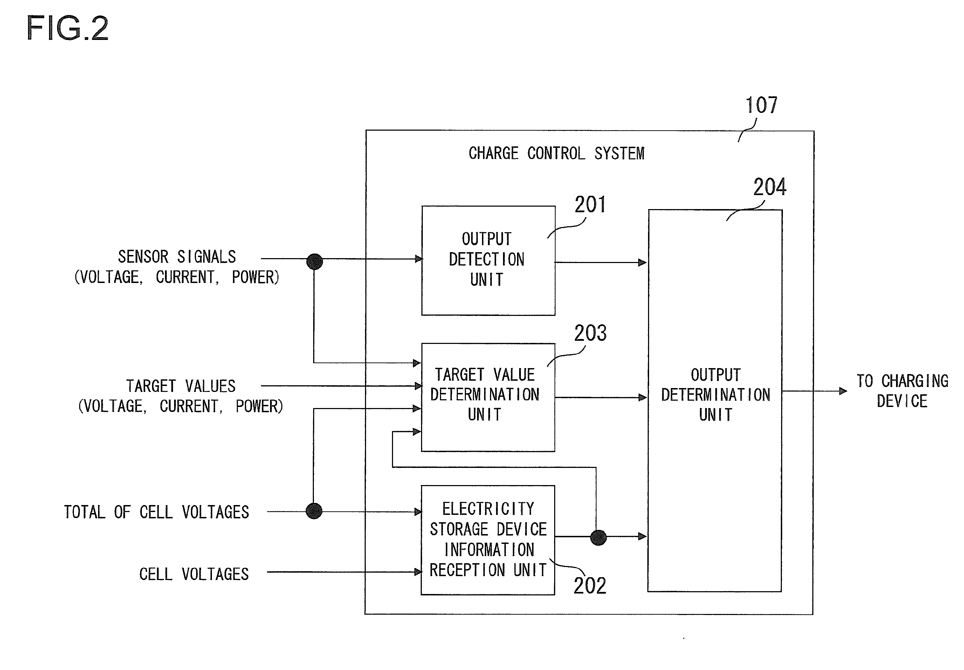

Fig. 2 shows an example of the structure of the charge control system 107 shown in Fig. 1. In this embodiment, an example is shown in which the charge control system 107 is constructed as one unit with the charging device 103. It should be understood that it would also be acceptable to arrange for the charge control system 107 to be built as an independent device from the charging device 103, or for it to be provided upon a microcomputer in the VCU 108 in the form of software. The charge control system 107 includes an output detection unit 201, an electricity storage device information reception unit 202, a target value determination unit 203, and an output determination unit 204. The output detection unit 201 receives the sensor signals from the sensors 103a through 103c (refer to Fig. 1) that detect the output voltage, the output current, and the output power of the charging device 103, and converts them to the output voltage, the output current, and the output power of the charging device 103. It should be understood that if no power sensor 103c is provided to the charging device 103, then the product of the output voltage from the voltage sensor 103a and the output current from the current sensor 103b may be obtained by the output detection unit 201, and may be outputted to the charging device 103 as the output power.

The electricity storage device information reception unit 202 either receives the total of the measured values of each of the cell voltages detected by the voltage detection circuit 105 within the electricity storage device 102 via the BCU 106, or receives measured values of each of the cell voltages and calculates their total. Here, the total of the values of the cell voltages is the same as the voltage value between the two ends of the electricity storage device 102, in other words is its total voltage. The target value determination unit 203 determines a target value for at least one of the output voltage, the output current, and the output power of the charging device 103. The method for determination of this target value will be described in detail hereinafter. And the output determination unit 204 determines a command value for the charging device 103 on the basis of the values calculated by the output detection unit 201, the electricity storage device information reception unit 202, and the target value determination unit 203.

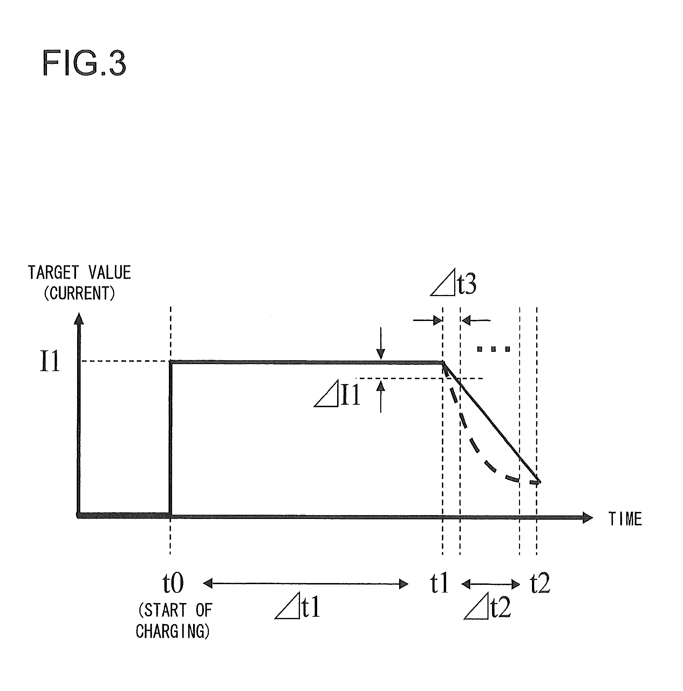

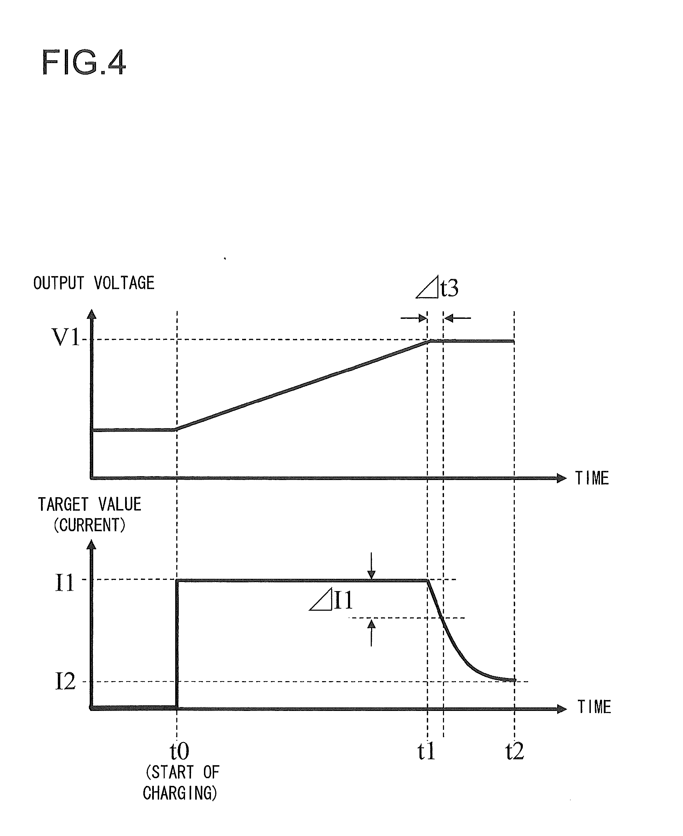

An example of the target value determination method performed by the target value determination unit 203 is shown in Figs. 3 and 4. The target value determination unit 203 sets the target value of the output current to I1 for just a predetermined time period Δt1 from the time point t0 at which charging is started. Moreover, for just a predetermined time period Δt2 from the time point t1 to a time point t2, the target value determination unit 203 reduces the target value of the output current by just a predetermined reduction step ΔI1 each time a predetermined time period Δt3 elapses, and then terminates charging. Here, values that are set in advance within the charge control system 107 may be used for the predetermined time periods Δt1, Δt2, and Δt3, the output current target value I1, and the target value reduction step ΔI1; or it would also be possible to set them by receiving information from outside the charge control system 107. Moreover, it would also be acceptable to arrange not to set the target value reduction step ΔI1 to be fixed, but rather to set the reduction step ΔI1 so that it reduces gradually. In this case, the target value for the output current would change as shown by the broken line in the figure.

Or, as shown in Fig. 4, there is a method in which, at the start of charging, the target value of the output current is set to I1 until the output voltage becomes a predetermined voltage V1, and, after the output voltage has arrived at V1, the target value of the output current is reduced by just a predetermined reduction step ΔI1 each time a predetermined time period Δt3 elapses, until the target value of the output current reaches 12. Here, as the output voltage, at least one is used of the sensor signal received from the voltage sensor 103a, the total of the values of the voltages of the cells of the electricity storage device 102 received by the electricity storage device information reception unit 202, and the total of the values of the cell voltages that has been calculated by receiving these cell voltages with the electricity storage device information reception unit 202. Moreover, while here an example is shown in which information about the output voltage and the output current is used, since the output power is the product of the output voltage and the output current, a similar method may be implemented by using the value of the output power, instead of the value of the output voltage or the value of the output current.

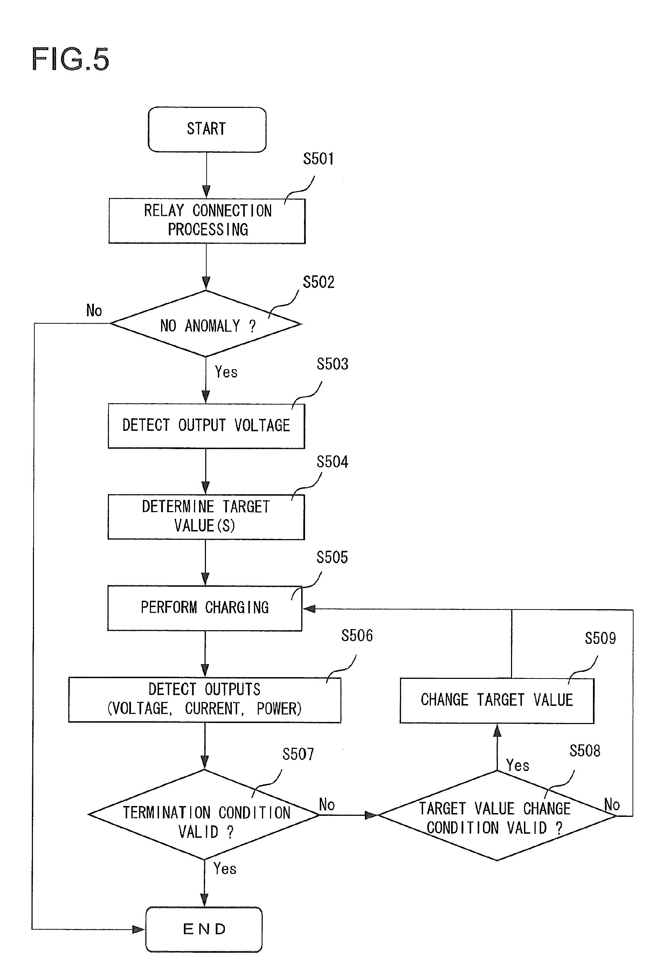

Fig. 5 is a flow chart showing a charging control program according to an embodiment. This charging control program is stored in a memory (not shown in the figures) of the charge control system 107. A CPU (not shown in the figures) of the charge control system 107 starts to execute this charging control program from the time point that the charging device 103 is connected to a commercial power supply 104. In a step S501, relay connection processing is performed in order to connect the charging device 103 to the electricity storage device 102. A relay (not shown in the figures) is installed between the charging device 103 and the electricity storage device 102, and processing is performed to close this relay so as to connect the electricity storage device 102 to the charging device 103. After this relay connection processing has been completed, in a step S502 a decision is made as to whether or not any anomaly is present in the operation of the above described relay, or any anomaly is present in the charging device 103 or the electricity storage device 102, or any communication anomaly is present in communication between the charge control system 107 and some other controller (such as the VCU 108, the BCU 106, or the like), and if there is an anomaly then this charging processing is terminated. But if it is decided in the step S502 that no anomaly is present, then the flow of control proceeds to a step S503, and the output voltage of the charging device 103 is detected from the sensor signal of the voltage sensor 103a incorporated in the charging device 103.

Next in a step S504 target values for the output voltage, and/or the output current, and/or the output power of the charging device 103 are determined. As described above, by the method shown in Fig. 3 or Fig. 4, the target value determination unit 203 may determine target values for the output voltage and the output current, or for the output power and the output voltage, or for the output power and the output current. Then in a step S505 the charging device 103 supplies power to the electricity storage device 102 and thereby performs charging of the electricity storage device 102. Next in a step S506 the output voltage, the output current, and the output power of the charging device 103 are detected. While the details thereof will be described hereinafter, the output voltage is detected by the voltage sensor 103a of the charging device 103 or the voltage detection circuit 105 of the electricity storage device 102, and the output current and the output power are respectively detected by the current sensor 103b and by the power sensor 103c on the side of the charging device 103.

Then in a step S507 a decision is made as to whether or not a charging termination condition (that will be described in detail hereinafter) has become valid. If this termination condition is not satisfied, then the flow of control proceeds to a step S508, while if the termination condition has become valid then the execution of this charging control program is terminated. However if the termination condition is not satisfied, then in the step S508 a decision is made as to whether or not a change condition for the target value (that will be described in detail hereinafter) has become valid. If the target value change condition is not satisfied, then the flow of control returns to the step S505 above and charging continues, while if the target value change condition has become valid, then the flow of control proceeds to a step S509 in which the target value is changed.

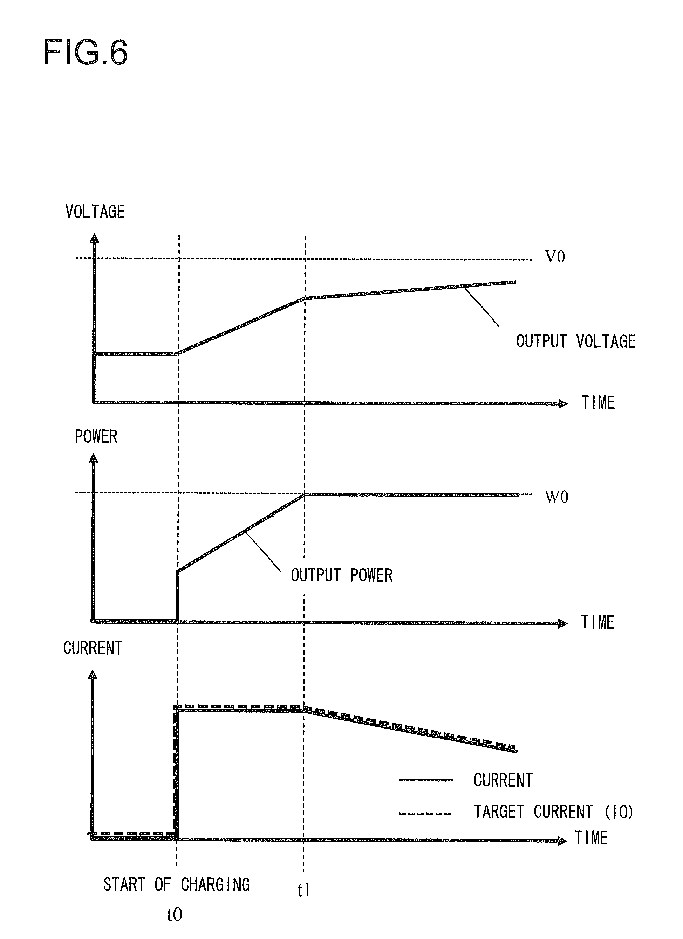

The charging termination condition and the target value change condition described above will now be explained using the timing chart shown in Fig. 6. Fig. 6 shows an example of the relationships between the target values for output voltage, output power, and output current and the values actually detected by the output detection unit 201 (refer to Fig. 2), when the charging control program shown in Fig. 5 is executed. During charging from the time point t0 at which charging is started, the output voltage V0, the output current 10, and the output power W0 that are to be the targets are set. In this embodiment, the priority order when a plurality of values have arrived at their target values is, from high to low, voltage, power, and current. And if, as shown in Fig. 6, the initial output voltage and the initial output power at the start of charging are both smaller than their target values V0 and W0, then charging is performed while controlling the output current according to the target value 10 for output current. Thereafter, as the charging process proceeds, because the voltage of the electricity storage device 102 increases, the output power also increases. And, after the output power has reached its target value W0 at the time point t1, the target value 10 for the output current is gradually reduced so that the output power does not exceed its target value, and charging proceeds in this manner.

In other words, in this embodiment, the arrival of the voltage at its target value V0, with the output voltage being the highest parameter in priority order, is taken as being the charging termination condition. When the output power with the second priority order reaches its target value W0, the target value 10 for the output current is changed so that the output power does not exceed its target value W0 assuming that the target value change condition has become valid. It should be understood that, if for example a commercial power supply 104 (refer to Fig. 1) is being obtained from a socket for household use by performing charging while controlling the output power during charging to be less than or equal to its target value W0, it becomes possible to limit the power required for charging the electric automobile 101 to within the range of the power that is distributed for household use. It should be understood that although, in Fig. 6, an example is shown in which the output power of the charging device 103 during charging is controlled by setting the target value W0 for the output power, there is no need necessarily to control the output power. It would also be acceptable for the charging to be performed while controlling the output voltage and the output current of the charging device 103.

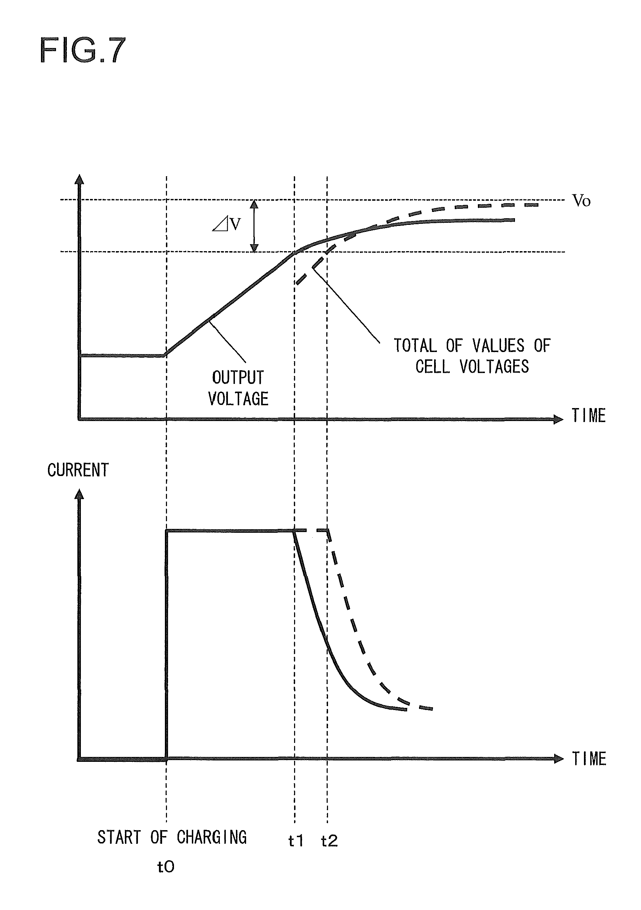

Figs. 7 through 10 are timing charts showing examples of charging control when the charging control program shown in Fig. 5 is executed.

### Example #1 of Charging Control

Fig. 7 shows an example of control in which charging is performed by using the output voltage detected by the voltage sensor 103a of the charging device 103, and the total of the values of the cell voltages received by the electricity storage device information reception unit 202. In this example #1 of charging control, the target value V0 for the output voltage and the target value 10 for the output current are set by the target value determination unit 203 (refer to Fig. 2). Moreover, it will be supposed that the charging termination condition becomes valid at the time point when the total of the values of the cell voltages reaches its target value V0, and that the change condition for the target current 10 becomes valid from the time point when the difference between the output voltage and the target voltage V0 becomes less than a predetermined value ΔV. In Fig. 7, the solid lines show both the output voltage and the output current in the case of the charging being continued to the target value V0 by using the output value detected by the voltage sensor 103a of the charging device 103 subsequent to the time point t1 when the difference between the output voltage and the target voltage V0 becomes less than the predetermined value ΔV In Fig.7, the broken lines show both the output voltage and the output current in the case of the charging up to the output voltage target value V0 being performed by using the total of the values of the cell voltages received by the electricity storage device information reception unit 202 subsequent to the time point t1.

From the time point t0 at which charging is started, the charging is performed while using the output voltage detected by the voltage sensor 103a, and since the output voltage is lower than the target value V0, the electricity storage device 102 is charged up with the target value 10 of output current so that the output voltage is increased. And, subsequent to the time point t1 when the difference between the output voltage and its target value V0 becomes less than the predetermined value ΔV, charging is continued by using the total of the values of the cell voltages received by the electricity storage device information reception unit 202, or by using the total of the values of the cell voltages that the electricity storage device information reception unit 202 totals the cell voltages received by the electricity storage device information reception unit 202. It should be understood that, subsequent to the time point t1 of changeover to charging control according to the total of the values of the cell voltages, charging is performed as shown by the broken lines in Fig. 7. In this case, the charging of the electricity storage device 102 is continued with the target value 10 for the output current until the time point t2, and subsequent to the time point t2 the output current target value 10 is reduced, as explained above. At the time point t2, the total of the values of the cell voltages is lower than the output voltage as detected by the voltage sensor 103a, and the difference between the total of the values of the cell voltages and the output voltage target value V0 becomes less than the predetermined value ΔV

Here, this predetermined value ΔV for the difference between the output voltage and the output voltage target value V0 is a value that is determined by the detection accuracy of the voltage sensor 103a (refer to Fig. 1) that detects the output voltage. In this embodiment, a voltage sensor 103a having a detection error of ±1% is used, so that the predetermined value ΔV is 0.02 X the target value V0 for the output voltage. It should be understood that the value of the predetermined difference ΔV is not to be considered as being limited to the value employed in this embodiment; it may be set as desired, on the basis of the detection error of the voltage sensor 103a.

As will be clear from Fig. 7, by continuing charging subsequent to the time point t1 by changing over from the voltage detected by the voltage sensor 103a to the total of cell voltages from the electricity storage device information reception unit 202, it is possible to perform charging of the electricity storage device 102 up to a value closer to the output voltage target value V0.

Here, in order to manage the overcharged state and the overdischarged state and so on of each cell within the electricity storage device 102 in an accurate manner, it is necessary for the BCU 106 shown in Fig. 1 to acquire the voltage of each of the cells accurately. Due to this, the voltage detection circuit 105 in the electricity storage device 102 is designed so as to be able to detect the voltage of each of the cells accurately. Accordingly, if charging control is performed by using the voltages of the various cells or by using the total of these voltage values, as detected by the high voltage detection circuit 105 whose detection accuracy is high in this way, then it is possible to perform charging up to the neighborhood of the output voltage target value V0. However, it does take a certain time for all of the voltages of all of the cells to be detected by the voltage detection circuit 105. Due to this, during the initial charging period when the change of the output voltage is large, in other words until the time point t1, if charging control is performed by using the charging device side voltage sensor 103a whose detection time lag is low, as opposed to performing charging control by using the voltages of the various cells or their total from the voltage detection circuit 105, then more appropriate charging control becomes possible from the points of view of control responsiveness and control accuracy.

Furthermore, according to the method of performing charging by changing over at the time point t1 from the output voltage detected by the voltage sensor 103 a of the charging device to the total of the values of the cell voltages detected by the voltage detection circuit 105, it becomes possible to use a sensor whose accuracy of detection is lower as the voltage sensor 103a for the charging control until the time point t1. As a result, it is possible to reduce the cost of the device.

In this manner, with this embodiment, the voltage detection circuit 105 of the electricity storage device 102 has higher accuracy than the voltage sensor 103a of the charging device 103. Accordingly, as shown in Fig. 7, in the region in which the difference between the output voltage and its target value V0 is less than or equal to the predetermined value ΔV, in other words subsequent to the time point t1, it is possible to use the total of the values of cell voltages of the electricity storage device 102 that has high accuracy, so that it is possible to charge up the electricity storage device 102 to the neighborhood of the output voltage target value V0 with high accuracy.

It should be understood that, in this example #1 of charging control shown in Fig. 7, it would also be acceptable to perform the charging control from the time point t0 at which charging is started, by using only the total of the values of the cell voltages of the electricity storage device 102.

### Example #2 of Charging Control

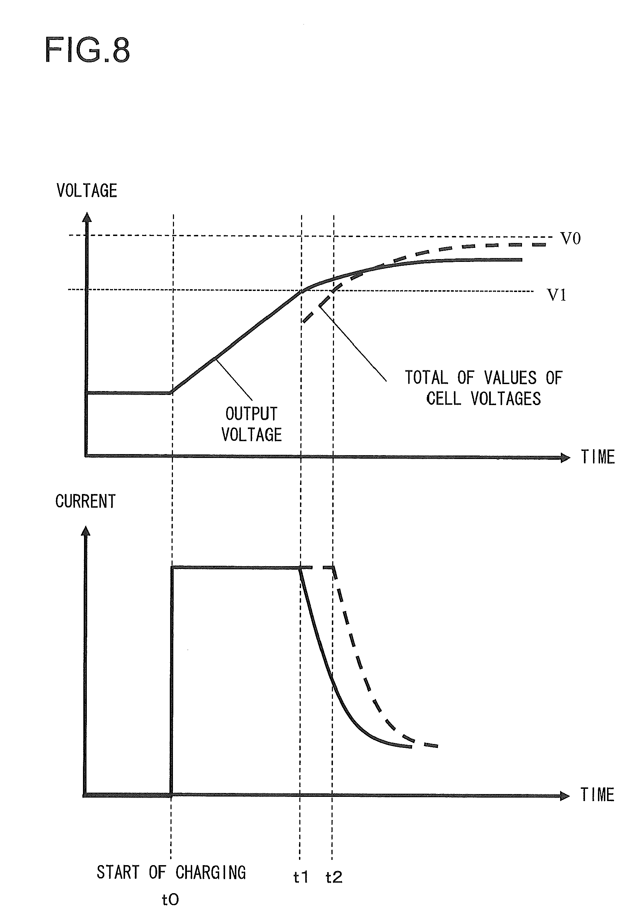

Fig. 8 shows another example of control, in which charging is performed using the output voltage detected by the voltage sensor 103a of the charging device 103, and the total of the values of the cell voltages received by the electricity storage device information reception unit 202. In this example #2 of charging control, the target value V0 for the output voltage and the target value 10 for the output current are set by the target value determination unit 203 (refer to Fig. 2). Moreover, it will be supposed that the charging termination condition becomes valid at the time point when the total of the values of the cell voltages reaches its target value V0, and that the change condition for the target current 10 becomes valid from the time point when the output voltage exceeds a predetermined voltage V1. In Fig. 8, the solid lines show both the output voltage and the output current in the case of the charging being continued to the target value V0 by using the output voltage detected by the voltage sensor 103a of the charging device subsequent to the time point t1 when the output voltage becomes greater than the predetermined value V1. In Fig. 8, the broken lines show both the output voltage and the output current in the case of the charging up to the output voltage target value V1 being performed by using the total of the values of the cell voltages received by the electricity storage device information reception unit 202 subsequent to the time point t1.

From the time point t0 at which charging is started, the charging is performed while using the output voltage detected by the voltage sensor 103a, and since the output voltage is lower than the target value V0, the electricity storage device 102 is charged up with the target value 10 of output current so that the output voltage is increased. And, subsequent to the time point t1 when the output voltage becomes greater than the predetermined voltage V1, charging is continued by using the total of the values of the cell voltages received by the electricity storage device information reception unit 202, or by using the total of the values of the cell voltages that the electricity storage device information reception unit 202 totals the cell voltages received by the electricity storage device information reception unit 202. It should be understood that, subsequent to the time point t1 of changeover to charging control according to the total of the values of the cell voltages, charging is performed as shown by the broken lines in Fig. 8. In this case, the charging of the electricity storage device 102 is continued with the target value 10 for the output current until the time point t2, and subsequent to the time point t2 the output current target value 10 is reduced, as explained above. At the time point t2, the total of the values of the cell voltages is lower than the output voltage as detected by the voltage sensor 103a, and the total of the values of the cell voltages becomes greater than the predetermined value V1.

Here, this predetermined voltage value V1 is a value that is determined by the detection accuracy of the voltage sensor 103a of the charging device, and, in this embodiment, since a voltage sensor 103a having a detection error of ±1% is used, accordingly it is possible to apply 98% of the output voltage to the electricity storage device. It should be understood that the value of the predetermined voltage V1 is not to be considered as being limited to this value; it may be set as desired, according to the detection error of the voltage sensor 103a.

With this embodiment, the voltage detection circuit 105 of the electricity storage device 102 has higher accuracy than the voltage sensor 103a of the charging device 103. Accordingly, as shown in Fig. 8, in the region in which the output voltage is greater than the predetermined voltage value V1, in other words subsequent to the time point t1, it is possible to use the total of the values of the cell voltages of the electricity storage device 102 that has high accuracy, so that it is possible to charge up the electricity storage device 102 to the neighborhood of the output voltage target value V0 with high accuracy.

It should be understood that, in the example #2 of charging control shown in Fig. 8, it would also be acceptable to perform the charging control from the time point t0 at which charging is started, by using only the total of the values of the cell voltages of the electricity storage device 102.

### Example #3 of Charging Control

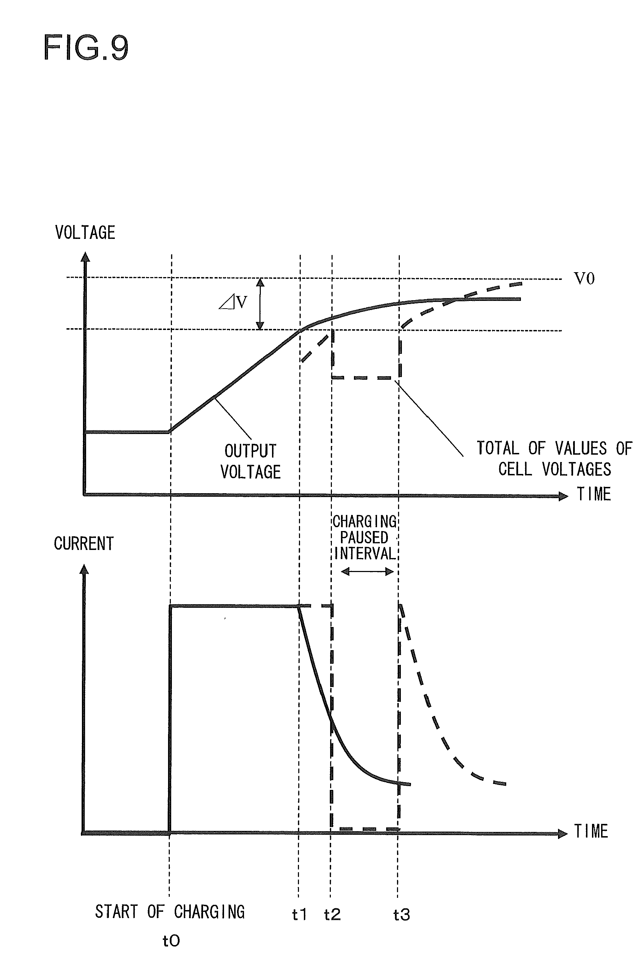

Fig. 9 shows an example in which a charging paused interval for measuring the cell voltages is provided to the example of charging control shown in Fig. 7. Generally, it is difficult to detect the cell voltages accurately while current is flowing through the cells, since the cell voltages change due to this current. Thus, after the time point t1 at which the difference between the output voltage and its target value V0 becomes less than the predetermined value ΔV, while controlling the charging using the total of the cell voltages, at least one charging paused interval is provided of any suitable timing and duration, in which the cell voltages are detected and the total of the values of theirs is calculated. Apart from the provision of this charging paused interval for detection of the cell voltages after the time point t1, this charging control is the same as the example #1 of charging control shown in Fig. 7, and accordingly explanation thereof is omitted. In the example shown in Fig. 9, the charging paused interval is provided from the time point t2 to the time point t3, and charging is resumed from the time point t3 by using the total of the values of the cell voltages measured and calculated in this charging paused interval.

The timing and the duration of this charging paused interval in example #3 of charging control are determined by the remaining capacity of the electricity storage device 102 and by the method of calculation of the total of the values of the cell voltages. In this embodiment, charging paused intervals are repeatedly implemented at timing determined by each time the remaining capacity of the electricity storage device 102 converted into percent rises by 1%, and their durations are set to at least a time interval during which it is possible to measure the total of the voltages of all of the cells in the electricity storage device at least five times. The average value of the results of measuring and calculating the total of the values of all of the cell voltages five times is employed. It should be understood that the method for determination of the timing and the duration of the charging paused intervals is not to be considered as being limited to the method of this embodiment; they may be determined as appropriate.

According to this example #3 of charging control, it is possible to detect the cell voltages more accurately, and thus it is possible to charge up the electricity storage device 102 to the neighborhood of the output voltage target value V0 more accurately.

### Example #4 of Charging Control

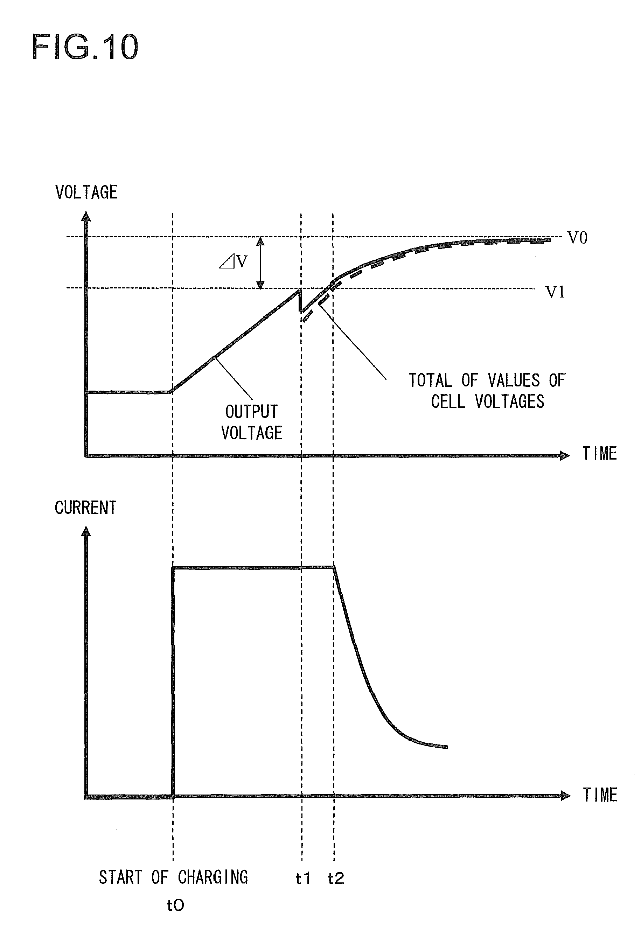

Fig. 10 shows an example of control in which charging is performed by correcting the output voltage detected by the charging device side voltage sensor 103 a with the total of the values of the cell voltages received by the electricity storage device information reception unit 202. In this example #4 of charging control, the target value V0 for the output voltage and the target value 10 for the output current are set by the target value determination unit 203 (refer to Fig. 2). Moreover, it will be supposed that the charging termination condition becomes valid at the time point when the output voltage reaches its target value V0, and that the change condition for the target current 10 becomes valid from the time point when the difference between the output voltage and the target voltage V0 becomes less than a predetermined value ΔV. In Fig. 10, the solid lines show both the output voltage and the output current that are derived by correcting the output voltage detected by the voltage sensor 103 a of the charging device according to the total of the values of the cell voltages obtained by the electricity storage device information reception unit 202 subsequent to the time point t1 when the difference between the output voltage and the target voltage V0 becomes less than the predetermined value ΔV. In Fig, 10, the broken line shows the total of the values of the cell voltages obtained by the electricity storage device information reception unit 202 after the time point t1.

From the time point t0 at which charging is started, the charging is performed while using the output voltage detected by the voltage sensor 103a, and since the output voltage is lower than the target value V0, the electricity storage device 102 is charged up with the target value 10 of output current so that the output voltage is increased. As shown in Fig. 10, at the time point t1, the difference between the output voltage and the target voltage V0 becomes less than the predetermined value ΔV. Subsequent to the time point t1, the output voltage detected by the voltage sensor 103a of the charging device is corrected by using the total of the values of the cell voltages received by the electricity storage device information reception unit 202 or by using the total of the values of the cell voltages that the electricity storage device information reception unit 202 totals the cell voltages received by the electricity storage device information reception unit 202, and charging is continued according to this output voltage after correction. It should be understood that, at the time point t1 when charging is started according to the output voltage corrected according to the total of the cell voltages, the corrected output voltage value is lower than the output voltage detected by the voltage sensor 103a. The charging of the electricity storage device 102 is continued with the target value 10 for output current until the time point t2 at which the difference between the corrected output voltage value and the target value V0 becomes less than the predetermined value ΔV, and subsequent to the time point t2 the output current target value 10 is reduced, as described above.

According to this example #4 of charging control, subsequent to the time point t1 at which the difference between the output voltage after the start of charging and the output voltage becomes less than the predetermined value ΔV, the output voltage that is detected on the charging device side is corrected according to the total of the values of the cell voltages whose accuracy is high, and charging is continued by using this corrected output voltage value. Due to this, it becomes possible to perform charging to the neighborhood of the output voltage target value V0 with higher accuracy, since it is possible to reduce voltage detection errors in the output voltage.

While examples have been shown of performing charging control by using the output voltage and the output current with the examples #1 through #4 of charging control shown in Figs. 7 through 10 described above, it should be understood that, since the output power is the product of the output voltage and the output current, it would of course also be possible to perform the charging control by using the output voltage and the output power, or by using the output current and the output power. The charging control in these cases would be the same as the examples of charging control #1 through #4 shown in Figs. 7 through 10 described above.

It should be understood that the embodiments and variant embodiments described above may be implemented individually, or may be implemented in any combination.

According to the embodiments and variant embodiments described above, the following beneficial operational effects may be obtained.
(1) In the charge control system 107 that controls the charging device 103 for the electricity storage device 102 that has the plurality of cells 102a connected in series and the voltage detection circuit 105 that detects the voltages of each of the cells 102a, there is provided the voltage sensor 103a that detects the output voltage of the charging device 103. And it is arranged to control the charging of the electricity storage device 102 by the charging device 103, on the basis of the result of comparison of the target charging voltage V0 of the electricity storage device and the output voltage detected by the voltage sensor 103a, and on the basis of the result of comparison of the target charging voltage V0 and the total of the values of the cell voltages detected by the voltage detection circuit 105. As a result it is possible to detect the total voltage of the electricity storage device 102 accurately, so that it is possible to charge up the electricity storage device 102 to a high level of charge with high accuracy.
(2) According to this embodiment and the variants thereof, until the output voltage detected by the voltage sensor 103a reaches the predetermined voltage that is lower than the target charging voltage V0, charging is controlled on the basis of the result of comparison between the target charging voltage V0 and the output voltage. After the output voltage has arrived at the predetermined voltage, charging is controlled on the basis of comparison between the target charging voltage V0 and the total of the values of the cell voltages detected by the voltage detection circuit 105. As a result, in addition to the beneficial effects described above, in the initial charging until the output voltage reaches the predetermined voltage that is lower than the target charging voltage V0**,** it is possible to implement charging control using the voltage sensor 103a that is cheap and that also has a quicker response. After the predetermined voltage has been reached, it is possible to implement charging control at high accuracy by utilizing the voltage detection circuit 105 whose accuracy of detection is high.
(3) According to this embodiment and the variants thereof, until the output voltage detected by the voltage sensor 103a reaches the predetermined voltage that is lower than the target charging voltage V0, charging is controlled on the basis of the result of comparison between the target charging voltage V0 and the output voltage. After the output voltage has arrived at the predetermined voltage, the output voltage that is detected by the voltage sensor 103a is corrected according to the total of the values of the cell voltages detected by the voltage detection circuit 105, and charging is controlled on the basis of comparison between the target charging voltage V0 and the output voltage after correction. As a result, in addition to the beneficial effects described above, in the initial charging until the output voltage reaches the predetermined voltage that is lower than the target charging voltage V0, it is possible to implement charging control using the voltage sensor 103a that is cheap and that also has a quicker response. After the predetermined voltage has been reached, it is possible to implement charging control at high accuracy by utilizing the voltage detection circuit 105 whose accuracy of detection is high.
(4) According to this embodiment and the variants thereof, in the charge control system 107 that controls the charging device 103 for the electricity storage device 102 that has the plurality of cells 102a connected in series and the voltage detection circuit 105 that detects the cell voltage of each of the cells 102a, it is arranged to control the charging of the electricity storage device 102 by the charging device 103 on the basis of the result of comparison of the target charging voltage V0 of the electricity storage device 102 and the total of the values of the cell voltages detected by the voltage detection circuit 105. Accordingly, it is possible to detect the total voltage of the electricity storage device 102 accurately, so that it is possible to charge up the electricity storage device 102 to a high level of charge with high accuracy.

The above described embodiments are examples, and various modifications can be made without departing from the scope of the invention.

## Claims

1. A charge control system that controls a charging device of an electricity storage device comprising a plurality of cells connected in series and a cell voltage detection circuit that detects the cell voltage of each of the cells, comprising:
a control circuit that controls charging of the electricity storage device by the charging device on the basis of result of comparison of a target charging voltage for the electricity storage device and total of values of the cell voltages detected by the cell voltage detection circuit.

2. A charge control system according to Claim 1, further comprising:
an output voltage detection circuit that detects output voltage of the charging device, and wherein:
the control circuit controls charging of the electricity storage device by the charging device, on the basis of result of comparison of the target charging voltage for the electricity storage device and the output voltage detected by the output voltage detection circuit, and on the basis of the result of the comparison of the target charging voltage and the total of the values of the cell voltages detected by the cell voltage detection circuit.

3. A charge control system according to Claim 2, wherein:
the control circuit controls the charging of the electricity storage device on the basis of the result of the comparison of the target charging voltage and the detected output voltage before the output voltage detected by the output voltage detection circuit reaches a predetermined voltage that is lower than the target charging voltage, and controls the charging of the electricity storage device on the basis of the result of the comparison of the target charging voltage and the total of the values of the cell voltages detected by the cell voltage detection circuit after the output voltage has reached the predetermined voltage.

4. A charge control system according to Claim 2, wherein:
the control circuit controls the charging of the electricity storage device on the basis of the result of the comparison of the target charging voltage and the detected output voltage before the output voltage detected by the output voltage detection circuit reaches a predetermined voltage that is lower than the target charging voltage, and
corrects the output voltage detected by the output voltage detection circuit according to the total of the values of cell voltages detected by the cell voltage detection circuit and controls the charging of the electricity storage device on the basis of the result of the comparison of the target charging voltage and the corrected output voltage after the output voltage has reached the predetermined voltage.

5. A charge control system according to any one of Claims 2 through 4, wherein:
the control circuit comprises a target value determination circuit that determines a target value for output power or for output current of the charging device on the basis of the result of the comparison of the target charging voltage and the output voltage or the result of the comparison of the target charging voltage and the total of the values of cell voltages, and the control circuit controls the output power or the output current of the charging device according to the target value determined by the target value determination circuit.

6. A charge control system according to Claim 5, wherein:
after the output power of the charging device has reached the target value, the target value determination circuit gradually reduces the target value for the output current of the charging device, so that the output power of the charging device does not exceed the target value.

7. A charge control system according to Claim 5, wherein:
after the output voltage detected by the output voltage detection circuit or the total of the values of the cell voltages detected by the cell voltage detection circuit has reached a predetermined voltage that is lower than the target charging voltage, the target value determination circuit gradually reduces the target value for the output current of the charging device.

8. A charge control system according to any one of Claims 1 through 7, wherein:
the control circuit sets the output current of the charging device to zero and pauses charging, when the cell voltage detection circuit performs voltage detection of the voltage of each of the cells.

9. An electric automobile, comprising:
the charge control system according to any one of Claims 2 through 8; and
the electricity storage device according to any one of Claims 2 through 8; wherein: detection accuracy of the output voltage of the charging device by the output voltage detection circuit is lower than detection accuracy of the cell voltages by the cell voltage detection circuit included in the electricity storage device.
